# EUROPEAN PATENT APPLICATION

(11) **EP 1 225 665 A2**
(43) Date of publication of application: **24.07.2002**
(21) Application number: 01310389.0
(22) Date of filing: 12.12.2001
(51) Int. Cl.: H01S 3/067, H01S 3/094

(54) **Optical amplifier**

(30) Priority: 22.12.2000 GB 0031503
(71) Applicant: ALCATEL, 75008 Paris (FR)
(72) Inventor: Zarris, George, London SE19 3TD (GB); Chryssou, Constantinos E., London EC1V 7DT (GB)
(74) Representative: Hackney, Nigel John

(57) **Abstract**

The present invention provides a two stage optical fibre amplifier wherein
the first stage of the amplifier is coupled via a first coupler to a first pump source producing pump radiation of a first wavelength and
the second stage of the amplifier is coupled via a second coupler to a second pump source producing radiation of a second wavelength
characterised in that
residual pump radiation from one of the amplifier stages is usable for amplification in the other amplifier stage
and wherein the amplifier includes locking prevention means for preventing radiation of the first wavelength from reaching the second pump source and also stopping radiation of the second wavelength from reaching the first pump source.

## Description

The present invention relates to an optical fibre amplifier.

As the tendency is to provide an increasing number of wavelength division multiplexed (WDM) channels in a given optical fibre, communication systems tend to require amplifiers with correspondingly increased bandwidth and higher signal output power.

It also becomes desirable to ensure that such amplifiers have a reasonably flat gain response. In order to do this, it is known to provide an amplifier with a gain flattening filter (GFF) which is normally placed at the output of the amplifier. However such GFFs have a relatively high insertion loss as, effectively, power is lost in order to flatten the wide amplification bandwidth. Both this insertion loss and the requirement for relatively high amplifier output power lead to a requirement in erbium fibre amplifiers for a very high erbium doped fibre output powers, which in turn leads to a requirement for a relatively high pump power. In the application of long-haul submarine systems, pump power is a potential system limitation and this situation may therefore limit the number of channels that can be transmitted in a given fibre, or may increase the number of pump sources needed per amplifier, which affects system complexity, power consumption and cost.

In order to provide a system which requires less pump power, it has been suggested to place the GFF at a mid-stage point in a double stage amplifier. This would reduce the required erbium output power from the second stage.

In related topologies, a signal isolator at mid-stage point is also used to prevent Amplifier Spontaneous Emission (ASE) travelling backwards and also, the two pumps (one per stage of the amplifier) from destabilising one another by injection locking. However, this system is still pump inefficient since a lot of residual pump power is absorbed and therefore lost in the mid-stage signal isolator.

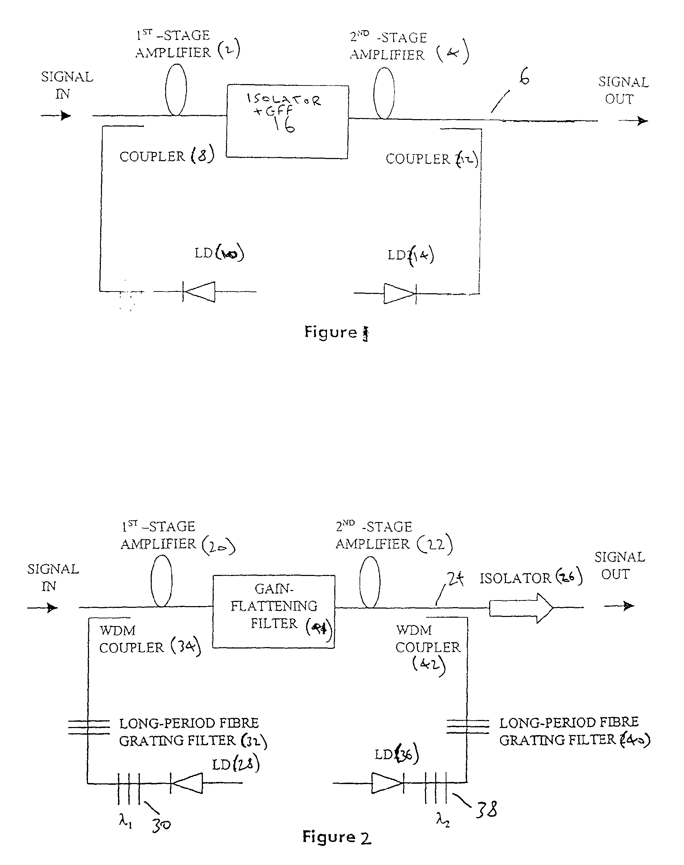

An example of this topology is illustrated in Figure 1 which shows a two stage amplifier consisting of a first stage 2 and a second stage 4 connected to a signal fibre 6. The first stage amplifier 2 is coupled via a coupler 8 to a laser diode pump source 10 producing radiation of wavelength λ1. Similarly the second stage amplifier 4 is coupled via a coupler 12 to a laser diode pump source 14 producing radiation of wavelength λ2. An isolator 16 and a gain flattening filter (GFF) are situated between the first and second stage amplifiers. The purpose of the signal isolator is two fold: (1) to stop the backward propagating ASE produced in the second stage from reaching the first stage, and (2) to prevent pump radiation of one pump from reaching the other pump, as this can cause instabilities in the radiation produced by the pumps.

The present invention aims to provide an optical amplifier with improved pump power efficiency.

Accordingly, in a first aspect the present invention provides a two stage optical fibre amplifier wherein
the first stage of the amplifier is coupled via a first coupler to a first pump source producing pump radiation of a first wavelength and
the second stage of the amplifier is coupled via a second coupler to a second pump source producing radiation of a second wavelength
characterised in that
excess pump radiation from one of the amplifier stages is usable for amplification in the other amplifier stage
and wherein the amplifier includes injection locking prevention means for preventing radiation of the first wavelength from reaching the second pump source and also stopping radiation of the second wavelength from reaching the first pump source.

In this way, efficient use may be made of excess pump radiation without any risk of injection locking of the pump sources.

Preferably one or both of the pump sources are laser diodes which may be wavelength locked by means of optical feedback at wavelength λ1 associated with the first pump source and at wavelength λ2 associated with the second pump source. Also preferably, the pump sources operate in the coherence collapse regime so that the pump radiation is relatively insensitive to external feedback other than that provided by the wavelength locking means. Also preferably the amplifier is an erbium doped fibre amplifier. Preferably the excess pump radiation from each of the amplifier stages is usable in the other amplifier stage.

Preferably the amplifier also includes a gain flattening filter located between the two amplifier stages. Also preferably, the second stage of the amplifier is counter-pumped and the first stage co-pumped such that excess pump radiation from each stage can be utilised by the other. For this purpose there is preferably no signal isolator used between the two stages of the amplifier.

Also preferably, the amplifier is of relatively low gain so that the backward propagating ASE which can accumulate along both amplifier stages does not degrade significantly the amplifier performance.

In one embodiment the means for preventing pump locking may include two long period fibre grating filters (LPFGs), the first LPFG being located in the pump path between the first coupler and the first pump source, and the second LPFG being located in the pump path between the second coupler and the second pump source. The first LPFG is transparent to wavelength λ1 and attenuates wavelength λ2 and correspondingly the second LPFG is transparent to wavelength λ2 and attenuates wavelength λ1. The LPFGs have the advantage of attenuating light without reflecting it back. As an alternative to LPFGs, short period blazed gratings could be used.

In a second embodiment, the means for preventing pump locking is incorporated within the properties of the two couplers themselves. For example, the two couplers may each be a bulk-optic wavelength division multiplexing coupler. The available transmission characteristics of such bulk-optic couplers are such that if couplers with appropriate characteristics are chosen then the first coupler will prevent any radiation of λ2 from reaching the first pump source and correspondingly the second coupler will prevent radiation of λ1 from reaching the second pump source.

In one proposal, one of the bulk-optic couplers may be a band-reject coupler such that the wavelength of the radiation which is not to be transmitted falls within the reject band. The second bulk-optic coupler may effectively be a high wavelength pass coupler such that the wavelength of the radiation to be passed is done so, whereas the radiation to be rejected is not.

In both of these embodiments, it is preferable that the GFF is single mode GFF and of relatively low loss at the pump wavelengths in question.

Embodiments of the present invention will now be described with reference to the accompanying drawings in which:
Fig. 1 is a schematic diagram of a prior art amplifier;
Fig. 2 is a schematic diagram of an amplifier according to a first embodiment of the present invention;
Fig. 3 is a schematic diagram of an amplifier according to a second embodiment of the present invention;
Fig. 4 shows the pump-path transmission characteristics of the couplers of Fig. 3.

Figure 2 shows a two stage amplifier including a first stage 20 and a second stage 22 connected to a signal fibre 24. An isolator 26 is included at the output of the amplifier. A pump source 28 (which in this case is a laser diode) is wavelength locked to a pump radiation wavelength λ1 by grating 30. The first pump source 28 is coupled via a long period fibre grating filter 32 and a wavelength division multiplexing coupler 34 to the first stage 20.

Similarly, a second pump source 36 (which again may be a laser diode) is wavelength locked to a pump radiation wavelength λ2 by a grating 38. Again this second pump radiation source is coupled via a second long period fibre grating filter 40 and a second WDM coupler 42 to the second stage 22.

In between the first and second stage of the amplifier is a gain flattening filter 41. By using the gain flattening filter without any means of signal isolation between the two stages of the amplifier improved pump efficiency is obtained. This is because the residual pump power from the first stage amplifier (20), originating from LD (28) can propagate through the GFF (41) and into the second stage amplifier (22) where it can be further absorbed, thus enhancing the amplifier pump efficiency.

The residual pump power from the second stage of the amplifier (22), originating from LD (28), and coupled into the LD (36) pump path, via the WDM coupler (42), will be attenuated by the LPFG (40) preventing it from destabilising the LD (36).

Similarly, the residual pump power from the second stage amplifier (22), originating from LD (36) can propagate through the GFF (41) and into the first stage amplifier (20) where it can be further absorbed, thus enhancing the amplifier pump efficiency.

The residual pump power from the first stage of the amplifier (20), originating from LD(36) and coupled into the LD (28) pump path via the WDM coupler (34) will be attenuated by the LPFG (32) preventing it from destabilising the LD (28).

The signal isolator is normally placed between stages to reduce backward propagating ASE build up. However, for low gain amplifiers the exclusion of this mid stage isolator has a very small impact in the amplifier performance.

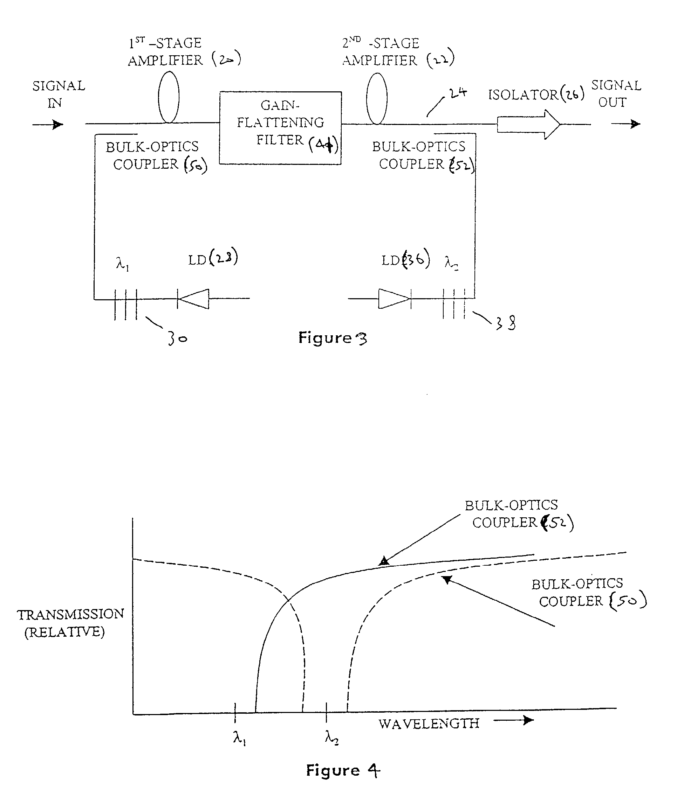

Figure 3 shows a second embodiment of the present invention. Elements which correspond to the embodiment of Figure 2 are given identical numbers. In this embodiment, effectively the two long period fibre grating filters of Figure 2 are omitted and the two WDM couplers are substituted by bulk-optic couplers.

A first bulk-optics coupler 50 is used to couple the first pump source 28 to the first stage 20 and a second bulk-optics coupler 52 is used to couple the second pump source 36 to the second stage 22. As explained previously, and as will be illustrated with reference to Figure 4, by selection of bulk-optic couplers with suitable characteristics, the effect of preventing unwanted pump radiation from reaching either or both of the two pump sources may be achieved.

As will be seen from Figure 4, in this example the pump radiation path of the first bulk-optic coupler 50 has a band reject characteristic. Pump radiation of wavelength λ2 will be substantially rejected by the coupler whereas radiation of wavelength λ1 will be substantially transmitted in the pump radiation path. By contrast, the second bulk-optics coupler 52 has a high wavelength pass characteristic such that radiation of wavelength λ1 will be substantially rejected whereas radiation of wavelength λ2 will be substantially transmitted in the pump radiation path. In addition both bulk-optics couplers (50) and (52) should exhibit a substantially low loss of the signal in the signal path.

Other suitable characteristics for the two bulk-optics couplers will be apparent to those skilled in the art. For example bulk-optics coupler 52 could have the characteristic of coupler 50.

Alternatively, couplers 50 and 52 could have an appropriate band pass characteristic.

The above embodiments are given by way of example only and variations will be apparent to those skilled in the art.

## Claims

1. A two stage optical fibre amplifier wherein
the first stage of the amplifier is coupled via a first coupler to a first pump source producing pump radiation of a first wavelength and
the second stage of the amplifier is coupled via a second coupler to a second pump source producing radiation of a second wavelength
**characterised in that**
residual pump radiation from one of the amplifier stages is usable for amplification in the other amplifier stage
and wherein the amplifier includes locking prevention means for preventing radiation of the first wavelength from reaching the second pump source and also stopping radiation of the second wavelength from reaching the first pump source.

2. An amplifier according to claim 1 wherein one or both of the pump sources are laser diodes.

3. An amplifier according to claim 1 or claim 2 wherein the residual pump radiation from each of the amplifier stages is usable in the other amplifier stage.

4. An amplifier according to any of the above claims including a gain flattening filter located between the two amplifier stages.

5. An amplifier according to any of the above claims wherein the second stage of the amplifier is counter-pumped and the first stage co-pumped with respect to the signal direction of propagation.

6. An amplifier according to any of the above claims including means for wavelength locking the two pump sources.

7. An amplifier according to claim 6 wherein pump injection locking prevention means includes two long period fibre grating filters (LPFGs), the first LPFG being located in the pump path between the first coupler and the first pump source, and the second LPFG being located in the pump path between the second coupler and the second pump source, and wherein the first LPFG is transparent to the first wavelength and attenuates the second wavelength and correspondingly the second LPFG is transparent to the second wavelength and attenuates the first wavelength.

8. An amplifier according to claim 6 wherein pump injection locking prevention means includes two blazed grating filters (BGFs), the first BGF being located in the pump path between the first coupler and the first pump source, and the second BGF being located in the pump path between the second coupler and the second pump source, and wherein the first BGF is transparent to the first wavelength and attenuates the second wavelength and correspondingly the second BGF is transparent to the second wavelength and attenuates the first wavelength.

9. An amplifier according to any one of claims 1 to 5 wherein the pump injection locking prevention means is incorporated within the properties of the two couplers themselves.

10. An amplifier according to claim 9 wherein the two couplers are each be a bulk-optic wavelength division multiplexing coupler.
